(19) Europäisches Patentamt
European Patent Office
Office européen des brevets

(11) EP 3 842 381 A1

## (12) EUROPEAN PATENT APPLICATION

(43) Date of publication:
30.06.2021 Bulletin 2021/26

(51) Int Cl.:
C01B 13/02 (2006.01)    G05D 21/00 (2006.01)

(21) Application number: 19219518.8

(22) Date of filing: 23.12.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(71) Applicant: Sensirion AG
8712 Stäfa (CH)

(72) Inventors:
• Streiff, Matthias
  8712 Stäfa (CH)
• Röck, Frank
  8712 Stäfa (CH)
• Bürgi, Lukas
  8712 Stäfa (CH)

(74) Representative: Toleti, Martin
E.Blum & Co. AG
Vorderberg 11
8044 Zürich (CH)

### (54) DEVICE FOR HOLDING A TARGET GAS

(57) A device for holding a target gas comprises a compartment (1) configured to hold the target gas (tg). The device further comprises a gas generator (2) configured and arranged to release the target gas in the compartment (1) in response to a control signal (cs). The device further comprises a reference sensor (3) sensitive to the target gas (tg) and arranged to supply a sensor signal (rs) representing a concentration of the target gas in the compartment (1). A control unit (4) is provided and configured to control the release of the target gas (tg) from the gas generator (2) by way of the control signal (cs), dependent on the sensor signal (rs). The gas generator (2) and the reference sensor (3) are arranged in the compartment (1).

Fig. 1

EP 3 842 381 A1

## Description

### Technical Field

The invention refers to a device for holding a target gas and to a method for controlling a concentration of a target gas in a compartment.

### Background Art

In various applications, a concentration of a target gas is to be maintained in a confined compartment over time. However, without any additional efforts, the concentration of the target gas in the compartment may drop over time even if the compartment is confined gastight. Reasons for such drop in the target gas concentration may be due to a physical adsorption of the target gas on inside surfaces of walls defining the compartment. In a different scenario, chemical reactions of the target gas with constituents of the inside of the walls defining the compartment may be the reason for the gradual drop of the target gas concentration in the compartment. And finally, even though the compartment as such may be deployed as gas-tight, the target gas concentration may drop over long time scales due to diffusion processes or tiny leaks.

In some applications, the compartment is configured to hold a gas mixture with the target gas being one of the gaseous components in the compartment. Such gas mixture may be formed on purpose in the compartment, or the gas mixture may include a different desired gas component in the compartment with the target gas being a background gas. The problems of a drop in target gas concentration over time remain the same.

DE 32 43 012 A1 refers to a method of producing oxygen from zinc peroxide. A zinc peroxide which is prepared both in known manner and in previously unknown manner by reaction of an ammoniacal solution of zinc salts with $H2O2$ is used. With this method of manufacture a zinc peroxide having at most 14% active oxygen is obtained. This oxygen is liberated either by heating the zinc peroxide or by reaction with acids or acid compounds, obtaining as intermediate stage hydrogen peroxide which is decomposed already in situ. The thermal decomposition can be effected either by external feeding of heat or by reacting the zinc peroxide with powdered metals which are mixed in the zinc peroxide. In this embodiment, the mixture of zinc peroxide and powdered metal need be ignited only at one point; once the reaction has been initiated, it then continues by itself. In the case of the decomposition of the zinc peroxide by acids or acid compounds, a decomposition catalyst for hydrogen peroxide is preferably mixed in the zinc peroxide.

« HSG-IMIT Abschlussbereicht - Kurzfassung : PhyGas Integriertes Sensorsystem zur physikalischen Gasanalyse », Kurt Kilche, 07.12.2011, HSG-IMIT, Wilhelm-Schickard-Strasse 10, D-78052 Villingen-Schwenningen, describes micro-thermal sensors for measuring gas compounds based on the gases different thermal properties.

### Disclosure of the Invention

The problem to be solved by the present invention is therefore to provide a device for holding a target gas at a desired concentration in a compartment, and to provide a method for maintaining a concentration of a target gas at a desired concentration in a compartment.

This problem is solved by a device for holding a target gas. The device comprises a compartment configured to hold the target gas. The compartment preferably is embodied as a defined volume. The volume preferably is defined by means of walls which allow the target gas to be confined in the compartment. The walls may define a housing of arbitrary shape confining the compartment. In a preferred embodiment, the walls are made from a gas-tight material, and in one embodiment the compartment as such is sealed from the outside. Gas-tight in this respect includes at least tight for the target gas, however, preferably tight for any gas. Accordingly, the compartment does not allow a gas exchange with the environment, i.e. a gas exchange between the compartment and the outside, also referred to exterior. Tight in this respect is tight at least on the short term, i.e. no significant exchange of the target gas between the inside of the compartment and the outside occurs e.g. within minutes or hours. In the long term, however, e.g. at the scale of days, months or more diffusion processes or losses due to tiny leaks may occur through the walls or sealings, although not desired.

According to embodiments, such tiny leaks may be defined as leaks with a leakage rate of less than 1 * $10^{-6}$ mbar l / s (1e-6 mbar l / s), in particular less than 1 * $10^{-8}$ mbar l / s (1e-8 mbar l / s).

According to embodiments, the compartment may also be denoted as container.

According to embodiments, the term compartment shall denote in particular a volume, while the term container shall denote a wrapping, closure or shell of the volume.

In one embodiment, the compartment may be accessible from the outside via an opening in the housing or a wall thereof, however, which opening is sealable during operation of the device. Hence, in one embodiment, a housing defining the compartment may comprise a door or a gate with a seal, which when closed, preferably contributes to the gas-tightness of the compartment.

During operation of the device, the target gas is held in the compartment. Prior to operation, the compartment may be filled with the target gas, and preferably is filled with the target gas at a desired concentration. Such initial filling of the compartment with the target gas may be achieved through the opening, while during regular operation of the device the opening preferably is closed by the door and / or gate. For such initial filling, a pipe including a valve may be connected to the opening, while after filling, the opening is closed and / or sealed.

The opening may in addition or alternatively be used for placing a unit to be tested in the compartment. Such placement may also be performed in an initial phase, while during operation the opening is closed and / or sealed with the unit remaining in the compartment. The application of such unit under test is explained further below.

A gas generator as explained further below may be inserted into the compartment through such sealable opening prior to operation.

In a different embodiment, the compartment does not comprise any access such as the sealable opening, but is manufactured as sealed cavity with the gas generator inside. Hence, in such scenario, but not limited to, the target gas generating entity may be included in the cavity of the compartment right from manufacturing, as may e.g. be a unit under test.

The device further comprises the gas generator that is configured and arranged to release the target gas in the compartment in response to a control signal. In particular, the gas generator is provided to compensate for a target gas loss during operation of the device and / or during life time of the device, and hence, is provided to release the target gas, and preferably to release a defined portion of the target gas upon request. For this controlled release of the target gas, the gas generator is controllable by the control signal, which control signal e.g. is generated by a different unit such as a control unit to be introduced below. The gas generator is arranged to allow the target gas to be released in the compartment. Accordingly, the release in the compartment shall include embodiments, in which the gas is stored inside or is generated from inside the housing defining the compartment. Pipes or other feeds supplying the target gas into the compartment from the outside shall be excluded. This is preferred in that other components such as valves etc. required for feeding the target gas from the outside increases chances of leakage. Accordingly, it is preferred that the gas generator is arranged in the compartment, such that during or in response to its activation the target gas is generated and/or released only from inside of the compartment. Hence, the gas generator is an autonomous gas generator arranged in the compartment.

The device further comprises a reference sensor sensitive to the target gas. Hence, the reference sensor preferably is a gas sensor that either directly or indirectly measures a concentration of the target gas in the compartment. For this reason, the reference sensor is arranged in the compartment. The reference sensor supplies a sensor signal indicative of a concentration of the target gas in the compartment, preferably of the actual target gas concentration. The sensor is denoted as reference sensor because its sensor signal preferably is used as a reference with respect to a desired target gas concentration in the compartment.

The reference sensor preferably is embodied as a thermal gas sensor. Preferably, such thermal gas sensor involves converting thermal properties of the target gas concentration into an electrical signal i.e. the sensor signal. The thermal properties may include one or more of thermal diffusivity, thermal conductivity, and/or thermal capacity of the target gas. The thermal gas sensor preferably is embodied as a micro-thermal gas sensor including structures in the micro- or even in the nanorange. A thermal gas sensor or micro-thermal gas sensor is configured to measure the concentration of the target gas based on the thermal property of the target gas, in particular in comparison to different thermal properties of gases other than the target gas. Different gases show different thermal properties, in particular in one or more of different thermal conductivities, different specific thermal capacities, and / or different densities. Hence, a thermal gas analysis even allows the determination of a concentration of a target gas in a gas mixture. In one embodiment, an electrical heater, referred to as reference heater, is provided in the reference sensor for heating the gas in vicinity of the reference sensor, as well as at least one temperature sensor is arranged in the reference sensor distant from the heater. A thermal flow is evoked when activating the reference heater, which thermal flow is detected by the one or more temperature sensors, however, phase-shifted with respect to the heater activation signal and subject to the target gas. The phase-shift between the temperature signal and the heater activation signal and / or between the temperature signals is evaluated, in particular when the reference heater is activated with one of a pulsed signal or a sinus signal. In particular, the thermal conductivity a, in a thermal gas sensor with a sinus shaped heater activation and two temperature sensors arranged at different distances d1 and d2 from the reference heater is determined by:

$$a = \frac{\pi * f * (d2 - d1)^2}{\Delta\varphi^2}$$

with $\Delta\varphi$ being the phase shift between the two signals of the temperature sensors and f being the frequency of the sinus shape reference heater activation.

In a different embodiment, the thermal conductance is the relevant parameter, wherein with a pulsed heater activation signal with intervals between the pulses being sufficiently long, a stationary thermal field is generated in the compartment, wherein a thermal conductivity can be derived from the temperature signal, in particular from a voltage of a thermopile representing the temperature sensor, by way of e.g. a look-up-table. In a different embodiment, the reference sensor is a pressure sensor. For example, a partial pressure of the target gas is a measure for the concentration of the target gas in the compartment provided a partial pressure of a background gas resident in the compartment in addition to the target gas is constant.

Other sensing principles may be applied in the reference sensor: In different embodiments the reference sensor is an optical spectroscopy sensor, or an electrochemical sensor, or a metal-organic chemical sensor, or an impedometric sensor, or a MOX gas sensor.

The device further comprises a control unit configured to control the release of the target gas from the gas generator by way of the control signal, dependent on the sensor signal, and hence, dependent on the current concentration of the target gas inside the compartment. Accordingly, input to the control unit is at least the sensor signal, and, preferably, as will be introduced below, a constant value, while the output of the control unit at least includes the control signal for controlling the gas generator. In one embodiment, the control unit is embodied as a feedback loop control, for controlling the target gas to the defined constant value, such that finally the compartment holds a desired target gas concentration over time represented by the constant value. In particular, the gas generator is activated by means of the control signal in response to the measured actual target gas concentration being lower than the desired target gas concentration represented by the constant value.

In one embodiment, the feedback control loop and hence the control unit is embodied in the digital domain, as integrated circuit. In another embodiment, the feedback control loop and hence the control unit is embodied as analogue control loop.

In a different embodiment, the control unit may include a look-up-table (LUT) in which in one variant a heating interval for the heating pulses for activating the heater can be derived dependent from the sensed target gas concentration, and preferably in addition dependent from an envisaged total runtime of the operation, e.g. for the unit under test. Preferably, the heating interval may also be adjusted e.g. by multiplication with a factor subject to a change in the desired target gas concentration over time.

In a different variant, the look-up table includes a relation between such heating interval for the heating pulses and a temperature of the heater and preferably in addition dependent from the envisaged total runtime of the operation, e.g. for the unit under test. Preferably, the heating interval may also be adjusted e.g. by multiplication with a factor subject to a change in the desired target gas concentration over time. The temperature of the heater may be determined by means as described further below.

Hence, an advantage of the invention is that the target gas concentration can be maintained at a desired level in the compartment which preferably is isolated from the outside, except for electrical, however sealed, connections if desired. I.e. the target gas concentration can be maintained and controlled autonomously in the compartment without valves, flow meters, mass flow controllers, and inlets or outlets. Given that the target gas may gradually be lost from the compartment by one or more of leakage to the outside, physical adsorption of the target gas on inside surfaces of walls defining the compartment, or by chemical reactions of the target gas with constituents of the walls defining the compartment, such loss may be compensated by a controlled supply of target gas from the gas generator.

Preferably, the compartment is confined by gastight walls. Preferably, the compartment is absent of a controlled means to increase the target gas concentration in the compartment, such as controlled valves, ab-/adsorber, etc. Preferably, the device is configured to solely increase the target gas concentration inside the compartment by way of activating the gas generator to release the target gas inside the compartment. Hence, no other target gas supply is envisaged.

Preferably, the control unit is arranged outside the compartment, and is electrically connected to the gas generator and the reference sensor inside the compartment by means of electrical connections being fed through the walls of the compartment in a sealed manner. In this embodiment, one or more walls defining the compartment comprises one or more gas-tight feedthroughs in which one or more electrical connections are provided for electrically connecting the gas generator and the reference sensor arranged in the compartment. Such feedthroughs can easily be implemented in a gas tight manner, e.g. as glass-feedthroughs, and will have a negligible effect on the gas composition in the compartment.

In a different embodiment, the control unit is arranged in the compartment. Also here, electrical connections may be provided in a sealed manner fed through a wall of the compartment, again in a gas-tight manner, in order to one or more of calibrating the reference sensor, supplying log data from the control unit to the outside, providing information as to the gas generator as explained in more detail below, or parametrizing the control unit e.g. in case of a new target gas to be generated in a controlled fashion.

In one embodiment, the compartment comprises a substrate and a casing which in combination build the housing defining the compartment. The gas generator and the reference sensor are arranged on the substrate in the compartment. The substrate may be a circuit board, a glass, or ceramic or semiconductor substrate which may electrically interconnect the gas generator and the reference sensor if desired, and to the control unit if also being arranged on the substrate. The casing may be made from a gas tight material such as metal or plastics. In one embodiment, the casing also encloses the substrate while in a different embodiment, the substrate represents a wall closing an opening of a cap-like casing attached to the substrate. A mechanical connection between the substrate and the casing preferably is gas-tight, i.e. sealed.

Preferably, the compartment is rather small in size, i.e. preferably has a volume of less than 1 liter. In a preferred embodiment, the volume of the compartment is between 100 $\mu$l and 1000 ml, preferably between 1 ml and 1000 ml. Accordingly, the compartment can be considered as a confined compartment, preferably of small size. In view of such size, it is preferred that the reference sensor is embodied in micro scale, preferably micromechanically. It is preferred that the control unit is represented by an ASIC or another integrated circuit, and it is preferred that the gas generator includes a condensed matter approach to generate the target gas rather than including an excess pressure storage for the target gas in the compartment.

In one embodiment, the target gas is oxygen (O2), and preferably is to be held in a small volume compartment between 1 ml and 1000 ml. If a target gas concentration lower than a given threshold is detected by the reference sensor in the small compartment, additional target gas is added to the compartment by activating a gas generator.

In one embodiment, the target gas is the sole gas in the compartment. In a different embodiment, the target gas is a background gas in combination with one or more other gases in the compartment. In such embodiment, the target gas may be an inert gas, such as SF6 or helium, for instance. In other scenarios, the target gas may be one of $N_2$, Ar, $CO_2$, etc. Optionally, a background gas concentration and a target gas concentration may also be monitored in such gas mixture. Optionally, with the same reference sensor the target gas and a background gas concentration may be monitored e.g. by identifying a concentration parameter indicative of a mixing ratio. Hence, in this embodiment, the reference sensor is sensitive to the background gas in addition to the target gas, wherein the target gas is different from the background gas. The reference sensor may either supply a background gas sensor signal representing a concentration of the background gas in the compartment, or a signal representing the mixing ratio between the target gas and the background gas as laid out above.

In a very preferred embodiment, the gas generator comprises a material emitting the target gas in response to thermal activation. The material is designed and / or chosen to release the target gas preferably in response to being heated. The material preferably is deposited in the compartment.

In one embodiment, the target gas is released upon decomposition of the material in response to the thermal activation. Accordingly, the material is supplied in the compartment and a corresponding heating temperature is applied e.g. by the control signal heating an electrical heater, such that decomposition is triggered. In such embodiment, a gas generator is employed in which a gas emitting material preferably is arranged on the substrate or elsewhere in the compartment, and is thermally decomposed. Because material compositions may change during this decomposition process, a relationship between a temperature distribution in the device and a target gas emission rate may alter over time. Therefore, even if target gas loss mechanisms in the compartment were constant, the monitoring of the target gas concentration and the controlled emission of the target gas in response to the detected actual target gas concentration inside the compartment is beneficial to maintain the desired target gas concentration.

In a very preferred embodiment, the material of the gas generator includes $ZnO_2$, preferably in form of one or many of powder and sand and grains and pressed pellets and granulate. Such material is suited to release $O_2$ as target gas in a decomposition process under thermal impact. In particular, $ZnO_2$ is decomposed into ZnO + $O_2$ for temperatures between 80°C and 200°C, and more preferably between 90° C and 150° C. The temperature preferably is achieved by means of an electric heater of the gas generator resident in the compartment.

In other embodiments, the material is one of $LiClO_4$, $LiClO_3$, $Ag_2O$, $Li_2O_2$, $NaClO_4$, $NaClO_2$, $KClO_4$, $KClO_3$, $Na_2O_2$, $K_2O_2$, $NaO_2$. The target gas is $O_2$ for all these compounds. Generally, generation of $O_2$ for these materials may even start at temperatures of and above 50° C, and especially between 50° C and 100° C. In particular, $LiClO_4$ is decomposed into LiCl + 2 $O_2$ for preferred temperatures between 380°C and 430°C. 2 $LiClO_2$ is decomposed into 2 LiCl + 3 $O_2$ for a preferred temperature of 270°C +/-10%. $Ag_2O$ provides 2 mmol $O_2$/g at preferred temperatures of 200°C or more. $Li_2O_2$ provides 0.1 mmol $O_2$/g at preferred temperatures of 340°C or more.

In different embodiments, the target gas is one of $N_2O$, $N_2$, $CO_2$, or $SO_3$. In particular, $NH_4NO_3$ is decomposed into 2 $H_2O$ + $NO_2$. 2 $NaN_3$ is decomposed into 2 Na + 3 $N_2$. $CaCO_3$ is decomposed into CaO + $CO_2$. $K_2S_2O_7$ is decomposed into $K_2SO_4$ + $SO_3$.

In a different embodiment, the material is configured to generate the target gas by desorption in response to the thermal activation, i.e. by thermal desorption, preferably subsequent to a preceding adsorption. In such embodiment, the material may be $CeO_2$ delivering a target gas $O_2$ of 0.2 mmol $O_2$/g. The material may also comprise molecular sieves, e.g. zeolites, silica, glass, clay, etc., in particular for generating target gases other than $O_2$.

The thermal activation of the material preferably is achieved by means of a heat source such as the above mentioned electrical heater or a laser or a different heat source. In view of the space constraints in the compartment and in view of an easy implementation, an electrical heater is preferred. The advantage of the electrical heater is that the gas generator can easily be turned ON and OFF by turning ON and OFF the electrical heater. In addition, thermal activation generally is preferred over chemical activation by adding other compounds for triggering a decomposition process. Moreover, the activation of gas emitting materials like e.g. $ZnO_2$ with acids or acidic substances often generates further products apart from the wanted target gas, which, contaminate the confined compartment. Contrary to this, thermal activation of gas emitting materials like e.g. $ZnO_2$ produces the wanted target gas - here $O_2$ - only.

Accordingly, thermal activation of the material is preferred, and the control signal supplied by the control unit is configured to control the electrical heater. The control signal may be designed simply as binary ON and OFF signal for activating the heater, wherein e.g. a time the control signal is switched ON is equal to the time the measured target gas concentration is below the desired target gas concentration. In a different embodiment, the control signal may have more than two states, and e.g. may vary in amplitude in order to accelerate the release of the target gas, subject to the decomposition temperature of the material used.

Preferably, the control unit is configured to control a target gas concentration inside the compartment to a constant value in a feedback loop. For this purpose, the control unit preferably comprises a comparator configured to compare the sensed actual target gas concentration supplied by the sensor signal. And, the control unit preferably comprises a controller configured to define the control signal subject to a difference between the sensed actual target gas concentration and the constant value as provided by the comparator.

In case the gas generator comprises an electrical heater as laid out above, the control signal is provided to control the electrical heater. Hence, in case of a changed target gas concentration in the compartment, the changed target gas concentration is measured by the reference sensor, and in the above example an electric power is applied to the heater in a feedback control loop.

Preferably, the feedback control loop may implemented in one of the following ways:

In the simplest form, the controller of the control unit is a PI controller which preferably is used with negligible proportional gain and mainly integral gain, i.e. with the goal of avoiding overshoot at the expense of a long settling time. This is due to the fact that the generation of the target gas can only be performed in an active manner, and that the target gas can only be removed by loss mechanisms. Preferably, and in addition, an integral windup is avoided by one or more of the following methods: Initializing the controller integral term to a desired value, or disabling the integral function until the measured target gas concentration has entered a controllable region, or preventing the integral term from accumulating above and/or below pre-determined bounds.

In a more advanced embodiment, a model predictive controller (MPC) may be employed imposing constraints of the considered control system. Such constraints are e.g. one or more of the following:

- range of possible dynamic responses of the target gas loss mechanism,
- dynamic response of the gas generator,
- dynamic response of the reference sensor,
- dynamic response of the confined compartment (time-lag).

In a further embodiment concerning the model predictive controller, in combination with a thermally activated gas generator that is operated at a fixed temperature, a hysteresis element is comprised in the control unit that translates the analog control signal of the controller into an on/off control signal applied to the thermally activated gas generator. If the thermally activated gas generator is to be operated over a range of temperatures, it is preferred that a linearizer is comprised in the control unit, and preferably in the controller, that is configured to linearize an analytic relationship between the control signal, e.g. a duty cycle of a pulse wave modulated (PWM) current of the control signal through the heater conductor, and a gas emitting reaction rate k of the gas generator, and in particular of the material, such that the above control method can be applied directly.

In case of a thermally activated gas generator by means of an electrical heater, a thermal conductivity of one or more of the gas emitting material, due to decomposition (e.g. $ZnO_2$ to $ZnO$ and $O_2$), the heater, due to aging of materials (e.g. tungsten, platinum) at high temperature, or other parts of the compartment or casing of the gas generator may change over time. E.g. in a confined compartment a lower boundary of a thermal leak is given by a thermal conductance between a boundary of the gas generator and a wall of the compartment. Any gas emitting material, which resides inside the gas generator, but cannot be heated to the temperature at which it starts to emit the target gas is inactive and will usually (e.g. in the case of $ZnO_2$, $ZnO$) lead to a higher thermal conductance of the gas generator, and hence a higher electrical power required to reach a wanted temperature, compared to the case in which said inactive target gas emitting material is replaced by a gas mixture inside the compartment, which will usually (e.g. in the case of He) lead to a lower thermal conductance, and hence to a lower electrical power required to reach a wanted temperature.

For this reason, it is preferred to provide means for determining an actual temperature of the electrical heater. Hence, it is preferred to monitor an actual heater temperature for a given electrical = thermal power in order to better control the target gas concentration.

Preferably the means comprise a temperature sensor arranged to directly or indirectly measure the actual temperature of the electrical heater. In one embodiment, an additional external temperature sensor is provided, which preferably is located outside the compartment, and e.g. may be attached to the compartment. In such embodiment, the temperature sensor preferably is arranged at a location thermally coupled the gas generator.

In a different embodiment, the means for determining the temperature of heater comprises the heater itself, and a small probe current or voltage applied to the heater for temperature measuring purposes. A voltage or current in response to the probe current or voltage, respectively, is measured. Out of the known probe current or voltage and the measured voltage or current, a resistance, and in particular a change in the resistance in response to the probe current or voltage can be determined which change in resistance is a measure for the temperature of the heater. In other words, a positive temperature coefficient of the heater conductivity is probed.

In response to such temperature measurement of the heater temperature, the control unit is configured to adjust a heating of the electrical heater in response to the determined actual temperature of the electrical heater.

If a temperature measurement is available as described above, another separate feedback control loop preferably is employed to control the temperature of the thermally activated gas generator. The same control methods described above can be employed for this control problem. However, whereas time constants involved in the control of the target gas concentration are on the scale of weeks and months, the time constants in the heater temperature control are on the scale of seconds to minutes.

According to a further aspect of the present invention, a method is provided for controlling a concentration of a target gas in a compartment. A concentration of the target gas in the compartment is sensed by a reference sensor sensitive to the target gas and arranged in the compartment. A gas generator is configured and arranged to thermally release the target gas in the compartment dependent on the sensed concentration of the target gas. The gas generator is arranged in the compartment and comprises a material emitting the target gas in response to thermal activation.

According to a preferred embodiment, a unit to be tested is placed in the compartment, and the target gas is released in the compartment, e.g. to reach an initial concentration. These two steps may be reversed in that the unit under test is only placed into the compartment after the target gas is initially released in the compartment. Thereafter, it is preferred that the iterative sensing of the target gas concentration and the controlling of the gas generator is applied, e.g. for terms of days or months, preferably for at least one month. In such application, the unit's long-term stability against the target gas is assessed, preferably wherein the unit is sensitive to the target gas.

Accordingly, in one embodiment, a concentration of a target gas towards which the unit under test is sensitive is controlled by the gas generator and the control unit by making use of the sensor signal of the reference sensor.

Other advantageous embodiments are listed in the dependent claims as well as in the description below.

Brief Description of the Drawings

The invention will be better understood and objects other than those set forth above will become apparent from the following detailed description thereof. Such description makes reference to the annexed drawings, wherein:

Fig. 1 illustrates a device according to an embodiment of the present invention;

Fig. 2 illustrates a device according to an embodiment of the present invention;

Fig. 3 illustrates a feedback control loop as implemented in a device according to an embodiment of the present invention;

Fig. 4 illustrates a flow chart illustrating a method according to an embodiment of the present invention.

Modes for Carrying Out the Invention

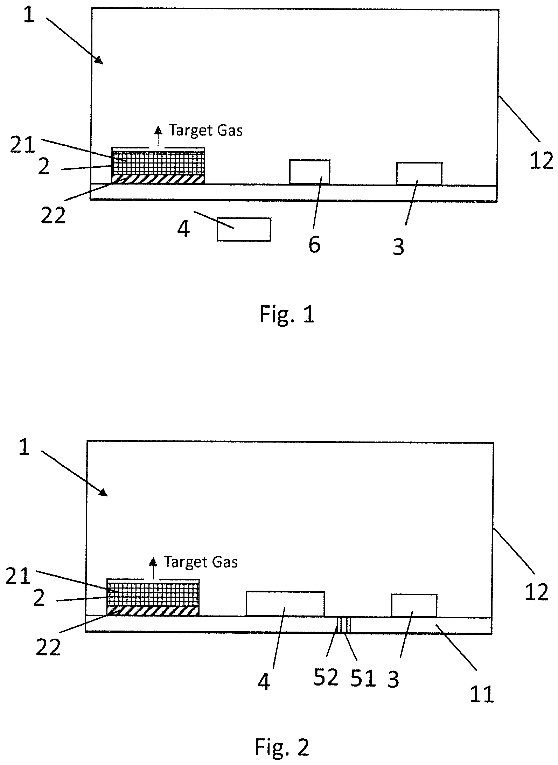

Fig. 1 illustrates a device for holding a target gas according to an embodiment of the present invention. The device comprises a compartment 1. The compartment 1 is defined by a gas-tight substrate 11 and a gas-tight casing 12. The casing 12 is attached to the substrate 11 by means of a gas-tight seal, such as an adhesive, not illustrated in Fig. 1. According to embodiments, the gas-tight substrate 11 and the gas-tight casing 12 establish a container.

A gas generator 2 is arranged on the substrate 11 in the compartment 1, or elsewhere in the compartment 1. The gas generator 2 comprises a material 21 emitting the target gas in response to thermal activation. A heater 22 of the gas generator 2 provides for the thermal activation, and hence, is thermally coupled to the thermally activatable material 21. The gas generator 2 may include a housing as indicated in Fig. 1 supporting the material 21 and, possibly, the electrical heater 22.

It is preferred that the substrate 11 comprises electrically conducting paths (not shown). Accordingly, the electrical heater 22 of the gas generator is electrically connected to the substrate 11, and hence to electrically conducting paths on/in the substrate 11.

In addition, a reference sensor 3 is arranged on the substrate 11 in the compartment 1. The reference sensor 3 is configured to sense a concentration of a target gas, such as O2, in the compartment 1. The reference sensor 3 is likewise electrically connected to conducting paths of the substrate 11. Further, a control unit 4 is provided outside of the compartment 1. The control unit 4 is configured to control the gas generator 2 by means of a control signal to achieve and maintain a target gas concentration in the compartment 1 of a constant level, dependent on a sensor signal supplied from the reference sensor 3. Hence, corresponding electrical connections (not shown) are provided to the gas generator 2 and the reference sensor 3.

A unit 6 under test preferably is arranged in the compartment 1. The unit 6 desirably is exposed to the target gas at a preferably stable concentration over a desired time in order to evaluate an impact of the target gas on the unit 6 under test.

Fig. 2 illustrates a device according to an embodiment of the present invention. Same components are referred to by the same reference numerals as in Fig. 1. In this embodiment, the control unit 4 is arranged inside the compartment 1.

The reference sensor 3 and the gas generator 2 are both electrically connected to the control unit 4 by means of the conducting paths on/in the substrate 11.

Preferably, one or more electrical connections 51 are provided from the compartment 1 to the outside, i.e. the exterior. By such electrical connection, the control unit 4 may supply data to the outside, such as data on a necessity to have released target gas from the gas generator, or data about the stock of the material 22. Presently, the electrical connection reaches through the support 11. However, it may alternatively reach through the casing 12 or any other component defining the compartment 1. The electrical connection 51 is arranged in a gastight feedthrough 52 providing a sealing of in of the compartment 1 at the location of the electrical connection 51.

In an embodiment, where the control unit 4 is arranged outside the compartment 1, the electrical connections 51 in the feedthroughs 52 may serve to receive, at the control unit 4, the sensor signal from the reference sensor 3, and to send, from the control unit 4, the control signal to the gas generator 2.

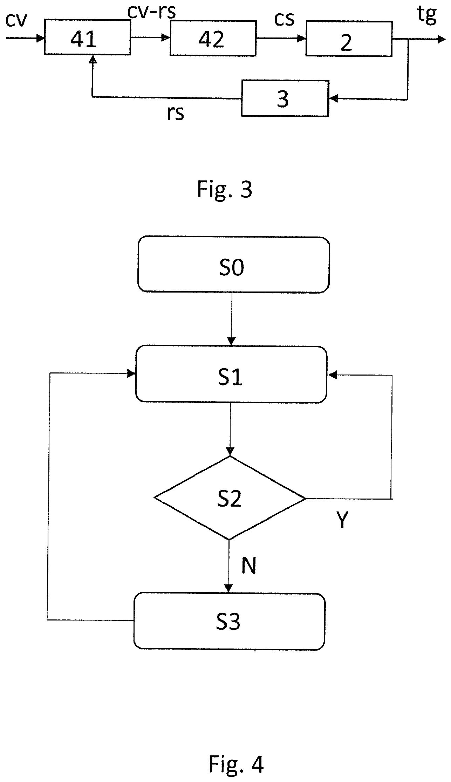

Fig. 3 illustrates a feedback control loop as implemented in a device according to an embodiment of the present invention. In particular, the feedback control loop may be implemented by means of a reference sensor 3 as input means, a gas generator 1 as controlled system, and a control unit implementing the controlling function, such as e.g. described in connection with Fig. 1. The control unit 4 preferably is provided in form of an integrated circuit. However, the functionality of the control unit 4 may alternatively be embodied as analogue circuit.

The control loop includes a comparator 41, and a controller 42. The comparator 41 compares a sensor signal rs from the reference sensor 3 to a constant value cv, i.e. a target value for the concentration of the target gas in the compartment 1 which is set up-front. An output of the comparator 41 supplies a difference signal cv-rs between the constant value cv and the sensor signal rs representing the sensed actual target gas concentration to the controller 42, which in the present embodiment is a PI controller 42. The PI controller 42 translates the difference signal cv-rs into a control signal cs to control the gas generator 2, and in the present embodiment an electrical heater of the gas generator 2. The gas generator 2 in turn impacts a target gas concentration tg in the compartment.

Fig. 4 illustrates a flow chart illustrating a method for controlling a concentration of a target gas in a compartment according to an embodiment of the present invention, e.g. for the application of a unit under test. In step S0, the device is started for operation. In a first step S1, an actual concentration of the target gas inside the compartment is sensed by a reference sensor. In step S2, the sensed actual target gas concentration is compared to a constant value. In case the target gas concentration exceeds or is equal to the constant value (Y), it is returned to step S1 and the target gas concentration in the compartment is sensed in a next time step. In case the target gas concentration is below the constant value (N), a gas generator in the compartment is activated to release the target gas, thereby increasing the target gas concentration in the compartment. It is returned to step S1 and the target gas concentration in the compartment is sensed in a next time step.

## Claims

1. Device for holding a target gas, comprising

   - a compartment (1) configured to hold the target gas (tg),
   - a gas generator (2) configured and arranged to thermally release the target gas in the compartment (1) in response to a control signal (cs), wherein the gas generator (2) comprises a material (21) emitting the target gas (tg) in response to thermal activation,
   - a reference sensor (3) sensitive to the target gas (tg) and arranged to supply a sensor signal (rs) representing a concentration of the target gas in the compartment (1),
   - a control unit (4) configured to control the release of the target gas (tg) from the gas generator (2) by way of the control signal (cs), dependent on the sensor signal (rs),

   wherein the gas generator (2) and the reference sensor (3) are arranged in the compartment (1).

2. Device according to claim 1,
   wherein the material (21) is configured to be decomposed in response to the thermal activation thereby emitting the target gas (tg).

3. Device according to claim 1 or claim 2,
   wherein the material (21) is configured to generate the target gas (tg) by desorption in response to the thermal activation.

4. Device according to any of the preceding claims, configured to solely increase the target gas concentration in the compartment (1) by way of activating the gas generator (2) to release the target gas (tg) in the compartment (1),
   in particular absent a controlled means to increase the target gas concentration in the compartment (1).

5. Device according to any of the preceding claims, wherein the compartment (1) is sealed from an exterior,

preferably wherein one or more walls defining the compartment (1) comprises one or more electrical connections (51) arranged in one or more gas-tight feedthroughs (52) for electrically connecting one or more of components arranged in the compartment (1) from the exterior.

6. Device according to any of the preceding claims, wherein a volume defined by the compartment (1) is less than 1000 ml.

7. Device according to any of the preceding claims, wherein the target gas is $O_2$, preferably wherein the material (21) includes $ZnO_2$.

8. Device according to any of the preceding claims, wherein the material (21) has the form of one or more of powder, sand, grains, pressed pellets and granulate.

9. Device according to any of the preceding claims, wherein the gas generator (2) comprises an electrical heater (22) for enabling the thermal activation of the material (21) and wherein the control signal (cs) is configured to control the electrical heater (22), preferably comprising means for determining a temperature of the electrical heater (22), preferably wherein the control unit (4) is configured to adjust a heating of the electrical heater (22) in response to the determined temperature of the electrical heater (22), preferably wherein the means comprises a temperature sensor (6) arranged to directly or indirectly measure the temperature of the electrical heater (22), preferably wherein the temperature sensor (6) is arranged outside the compartment (1), preferably is attached to a wall of the compartment (1), preferably is arranged at a location thermally coupled the gas generator (2), preferably wherein the means includes a probe current or probe voltage applied to the electrical heater (22).

10. Device according to any of the preceding claims, wherein the control unit (4) is configured to control a target gas concentration in the compartment (1) to a constant value (cv) in a feedback loop, wherein the control unit (4) comprises a comparator (41) configured to compare the sensed target gas concentration supplied by the sensor signal (rs) with the constant value (cv), wherein the control unit (4) comprises a controller (42) configured to define the control signal (cs) subject to a difference between the sensed target gas concentration and the constant value (cv) as provided by the comparator (41).

11. Device according to claim 10, wherein the controller (42) is a PI controller.

12. Device according to any of the preceding claims, wherein the reference sensor (3) is a thermal gas sensor, and preferably is a micro-thermal gas sensor.

13. Device according to any of the preceding claims, wherein the reference sensor (3) is sensitive to at least one background gas different to the target gas (tg) and is arranged to supply one of a background gas sensor signal representing a concentration of the background gas in the compartment (1), or a signal indicative of a mixing ratio between the target gas (tg) and the background gas.

14. Method for controlling a concentration of a target gas in a compartment, comprising

   - sensing a concentration of the target gas in the compartment (1) by means of a reference sensor (3) arranged in the compartment (1),
   - dependent on the sensed concentration of the target gas controlling a gas generator (2) arranged in the compartment (1) configured to thermally release the target gas (tg) in the compartment (1), the gas generator (2) comprising a material (21) emitting the target gas (tg) in response to thermal activation.

15. Method according to claim 14, comprising placing a unit (6) to be tested in the compartment (1), preferably for assessing the unit's (6) long-term stability against the target gas (tg), preferably wherein the unit (6) is sensitive to the target gas (tg), releasing the target gas (tg) in the compartment (1), and continuing with the sensing and the controlling step, preferably iterating the sensing and the controlling step, preferably for a term of at least one month.

Fig. 1

Fig. 2

Fig. 3

Fig. 4

Europäisches
Patentamt

European
Patent Office

Office européen
des brevets

# EUROPEAN SEARCH REPORT

Application Number

EP 19 21 9518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H05 119004 A (SANYO ELECTRIC CO) 14 May 1993 (1993-05-14) * paragraph [0007]; figure 1 * ----- | 1,14 | INV. C01B13/02 G05D21/00 |
| X | US 2009/311165 A1 (PODGORNEY HARVEY [GB]) 17 December 2009 (2009-12-17) * paragraphs [0019] - [0021], [0035]; figures 2, 3 * ----- | 1,2,14 | |

TECHNICAL FIELDS
SEARCHED     (IPC)

C01B
G01N
G05D

~~The present search report has been drawn up for all claims~~

| Place of search | Date of completion of the search | Examiner |
|---|---|---|
| The Hague | 15 July 2020 | Wilhelm-Shalganov, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................

& : member of the same patent family, corresponding
document

EPO FORM 1503 03.82 (P04C01)

Europäisches
Patentamt

European
Patent Office

Office européen
des brevets

**Application Number**

EP 19 21 9518

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2(completely); 1, 14(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 2(completely); 1, 14(partially)

  Decomposition

    ---

2. claims: 3(completely); 1, 14(partially)

  Desorption

    ---

3. claims: 4(completely); 1, 14(partially)

  Sole gas source

    ---

4. claims: 5(completely); 1, 14(partially)

  Sealed compartment

    ---

5. claims: 6(completely); 1, 14(partially)

  Small volume

    ---

6. claims: 7(completely); 1, 14(partially)

  Oxygen

    ---

7. claims: 8(completely); 1, 14(partially)

  Granular material

    ---

8. claims: 9(completely); 1, 14(partially)

  Electrical heater

    ---

9. claims: 10, 11(completely); 1, 14(partially)

  Feedback loop

    ---

10. claims: 12(completely); 1, 14(partially)

  Thermal gas sensor

    ---

11. claims: 13(completely); 1, 14(partially)

Europäisches Patentamt

European Patent Office

Office européen des brevets

**LACK OF UNITY OF INVENTION
SHEET B**

The Search Division considers that the present European patent application does not comply with the requirements of unity of invention and relates to several inventions or groups of inventions, namely:

    Cross sensitivity
            ---

12. claims: 15(completely); 1, 14(partially)

    Weathering test
            ---

## ANNEX TO THE EUROPEAN SEARCH REPORT
## ON EUROPEAN PATENT APPLICATION NO.

EP 19 21 9518

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2020

| Patent document cited in search report | | Publication date | Patent family member(s) | | Publication date |
|---|---|---|---|---|---|
| JP H05119004 | A | 14-05-1993 | JP 3143168 B2<br>JP H05119004 A | | 07-03-2001<br>14-05-1993 |
| US 2009311165 | A1 | 17-12-2009 | AT 540899 T<br>CN 101233080 A<br>EP 1917212 A1<br>JP 4871954 B2<br>JP 2009503712 A<br>US 2009311165 A1<br>WO 2007015054 A1 | | 15-01-2012<br>30-07-2008<br>07-05-2008<br>08-02-2012<br>29-01-2009<br>17-12-2009<br>08-02-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• DE 3243012 A1

**Non-patent literature cited in the description**

• HSG-IMIT Abschlussbereicht - Kurzfassung : PhyGas Integriertes Sensorsystem zur physikalischen Gasanalyse. Kurt Kilche. HSG-IMIT, 07 December 2011